(19) **Europäisches Patentamt**
**European Patent Office**
**Office européen des brevets**

(11) Veröffentlichungsnummer: **0 270 872**
**A1**

(12) **EUROPÄISCHE PATENTANMELDUNG**

(21) Anmeldenummer: **87116773.0**

(22) Anmeldetag: **13.11.87**

(51) Int. Cl.4: **G01D 3/08**

(30) Priorität: **25.11.86 CH 4704/86**

(43) Veröffentlichungstag der Anmeldung:
**15.06.88 Patentblatt 88/24**

(84) Benannte Vertragsstaaten:
**CH DE FR GB LI SE**

(71) Anmelder: **BBC Brown Boveri**
**Aktiengesellschaft**

**CH-5401 Baden(CH)**

(72) Erfinder: **Maschek, Martin**
**Florastrasse 33**
**CH-8116 Würenlos(CH)**
Erfinder: **Mastner, Georg, Dr.**
**Loonstrasse 3**
**CH-5443 Niederrohrdorf(CH)**

(54) **Verfahren und Einrichtung zur Funktionsüberwachung eines Messwertumsetzers.**

(57) Messwertumsetzer (5 - 10), insbesondere von Strom-und Spannungswandlern in Hochspannungs-Freiluftanlagen, sollen eine hohe Verfügbarkeit und Zuverlässigkeit aufweisen. Ein Messwertumsetzer weist mindestens 2 Eingangsverstärker (5, 6) mit unterschiedlichen Verstärkungsfaktoren (V, V/4) auf, die über Messbereichsumschalter (7, 8), einen als Impedanzwandler dienenden Verstärker (9) und einen Analog/Digital-Wandler (10) mit einem Schieberegister (11) mit parallelem Dateneingang und seriellem Datenausgang in Verbindung stehen. Um mit weniger Aufwand im Vergleich zu einer Verdoppelung eine hohe Sicherheit der einwandfreien Funktion des Messwertumsetzers zu gewährleisten, werden Ausgangssignale zu überwachender Bauelemente (5; 7 - 9) und/oder Spannungen (U14; ±15 V, +5 V) mit Ausgangssignalen von in der Funktion gleichwertigen Vergleichsbauelementen (6; 12 - 14) und/oder Referenzspannungen ($U_{REF}$ , $U'_{REF}$) mittels Differenzverstärkern (15, 18, 22, 25) verglichen. Die Ausgangssignale (S15, S18, S22, S25) der Differenzverstärker (15, 18, 22, 25) werden mittels Fensterkomparatoren (16, 19, 23, 26) auf ein Ueberschreiten vorgebbarer Grenzwerte überwacht. Bei Ueberschreitung eines dieser Grenzwerte wird, gegebenenfalls über ein ODER-Glied (17), ein Fehlersignal (S17) einem Fehlersignaleingang (F1, F2) des Schieberegisters (11) zugeführt. Ein vom Schieberegister (11) periodisch ausgegebenes Datentelegramm weist mindestens ein Fehlerkontrollbit auf, das von einem Datenempfänger ausgewertet werden kann.

## EINRICHTUNG ZUR FUNKTIONSÜBERWACHUNG EINES MESSWERTUMSETZERS

Technisches Gebiet

Bei der Erfindung wird ausgegangen von einer Einrichtung zur Funktionsüberwachung eines Messwertumsetzers.

Bei den elektronischen Stromwandlern für Freiluftanlagen wird ein Teil der Elektronik direkt im Kopf des Wandlers, also auf der Hochspannungsebene plaziert, wo die Elektronik auch voll den Umwelteinflüssen ausgesetzt ist. Jegliche Kontrolle der Elektronik ist hier schwierig, da sie eine Abschaltung der Leitung und Arbeit an einem relativ - schlecht zugänglichen Ort (oben am Isolator) voraussetzt. Die mittlere Ausfallrate (mean time between failure) von elektronischen Komponenten erlaubt heute einen langfristigen ungestörten Betrieb, der jedoch bei einem einfachen System nie absolut zuverlässig sein kann.

Um eine möglichst zuverlässige Funktion zu erreichen, wäre es notwendig, eine doppelte Redundanz (2 Reservesysteme, logische Entscheidung "zwei aus drei") zu verwenden, die allerdings ziemlich kostspielig ist.

Eine einfache Redundanz reduziert zwar theoretisch die mittleren Ausfallraten erheblich, nützt aber wenig, da bei einer "gracefull degradation" ein Kriterium zur Identifikation des intakten, richtig anzeigenden Systems nicht vorhanden sein muss. Es sind vor allem die analogen Bausteine, die zu einer schlecht detektierbaren "gracefull degradation" führen können. Während logische Bausteine bei einem Ausfall grösstenteils komplett versagen, was meistens auch in der Datenempfangsstelle leicht feststellbar ist, können analoge Bausteine (z.B. Operationsverstärker, Analogschalter, Spannungsreferenzen) durch "gracefull degradation" in einen Zustand geraten, in dem sie ihre Funktion nicht mehr richtig erfüllen, ohne dass sich diese Tatsache als komplettes Versagen an der Empfangsseite manifestieren muss (z.B. Vergrösserung vom Spannungs-oder Strom-Offset, Gain Verlust, Schwingungen wegen nicht funktionierender interner Frequenzkompensation bei Operationsverstärkern, degradierte Werte von R-on und R-off bei Schaltern, falsche Ausgangsspannung einer Spannungsreferenz usw).

Aus diesem Grunde weisen auch die analogen Komponenten eine wesentlich höhere mittlere Ausfallrate auf als digitale Komponenten gleicher struktureller Komplexität. Es sind im Endresultat die analogen Komponenten, die die mittlere Ausfallrate eines elektronischen Messwertumsetzers bestimmen.

Darstellung der Erfindung

Die Erfindung, wie sie in den Patentansprüchen definiert ist, löst die Aufgabe, eine Einrichtung zur Funktionsüberwachung eines Messwertumsetzers anzugeben, die mit weniger Aufwand eine hohe Sicherheit der einwandfreien Funktion des Messwertumsetzers gewährleistet.

Es ist also die Idee der Erfindung, durch Ueberwachung der Funktion der analogen Bausteine durch einen separaten Ueberwachungskreis möglichst einfacher Struktur eine kontinuierliche Selbstkontrolle des elektronischen Messwertumsetzers zu realisieren, deren binäres Resultat in jedem Datentelegramm in der Form von mindestens einem zusätzlichen Kontrollbit dem Datenempfänger zugeführt wird.

In der detaillierten Ausführung wird die Realisierung der Idee der vorliegenden Erfindung sehr stark von der konkreten Struktur des Analogteiles des elektronischen Messwertumsetzers abhängig sein.

Die prinzipiellen Merkmale des Ueberwachungskreises lassen sich in folgende Punkte zusammenfassen:

-Alle zu überwachenden analogen Funktionen des Messwertumsetzers werden mit einer anderen, gleichwertigen Funktion im Messwertumsetzer verglichen. Dieser Vergleich kann im Massstab 1 : 1 oder einem beliebigen, jedoch genau definierten Verhältnis (Skalierung) geschehen.

-Wo in der zu überwachenden Schaltung keine gleichwertige Funktion vorhanden ist, wird diese in dem Ueberwachungskreis separat nachgebildet.

-Der Vergleich des Ausgangssignales des zu überwachenden Schaltkreises mit dem Ausgangssignal des Schaltkreises mit gleichwertiger Funktion geschieht vorzugsweise laufend, beschränkt sich jedoch auf Zeitintervalle, wo beide zum Vergleich benutzten Schaltkreise sich innerhalb des nominellen Arbeitsbereiches befinden (z.B. innerhalb des linearen Ausgangsspannungsbereiches eines Operationsverstärkers). Zum laufenden Vergleich von analogen Spannungswerten können vorzugsweise Spannungs-Fensterdiskriminatoren benutzt werden, die mindestens zum Teil "gestrobt" (mit digitalem Signal "abgefragt") werden können.

-Wo immer Absolutwerte einer Spannung überwacht werden (z.B. Spannungsreferenz, Speisespannungen oder deren Kombination) wird im Ueberwachungskreis eine eigene Referenz benutzt.

-In Fällen wo von einem A/D Wandler Strobe-Signale abgeleitet werden können (wie z.B. bei einem Nachlauf-A/D Wandler), die einen signifikanten Momentanwert des verarbeiteten Signales markieren (z.B. +/- 1/2 vom Maximalwert, können diese Strobe-Signale zum Vergleich des Momentanwertes des verarbeiteten Signales mit einer Spannungsreferenz verwendet werden, um die absolute Genauigkeit des A/D Wandlers in diesem signifikanten Punkt zu überprüfen.

-Die Ausgänge der Spannungsvergleicher werden einer logischen Schaltung zugeführt, die diese binären Aussagen der Vergleicher entweder in einzelne Kontrollbits (Fehlerdiagnose-Bits) oder in ein gemeinsames Bit verarbeitet. Kontrollbit(s) wird-(werden) dann vorzugsweise mit dem periodischen Datentelegramm dem Datenempfänger übermittelt, können aber auch auf separatem Wege übertragen werden.

Ein Vorteil der Erfindung besteht darin, dass der zusätzliche Aufwand an Bauelementen kleiner ist als bei einer doppelten Redundanz. Daraus resultiert eine Kosteneinsparung.

Ein weiterer Vorteil besteht darin, dass die Fehlererfassung an schlecht zugänglichen Orten, wie z.B. an Hochspannungsanlagen, möglich ist. Die Erfindung eignet sich daher besonders für elektronische Strom-und Spannungswandler in Hochspannungsfreiluftanlagen, wo die elektronischen Bauelemente voll den Umwelteinflüssen ausgesetzt sind. Jegliche Kontrolle der Elektronik ist hier schwierig, da sie eine Abschaltung der Hochspannungsleitung und Arbeit an einem relativ - schwer zugänglichen Ort voraussetzt.

Ein weiterer Vorteil bei Verdoppelung der Ueberwachungsschaltungen besteht darin, dass ein Fehler in einer der beiden Ueberwachungsschaltungen erkennbar wird und nicht zu einer fehlerhaften Abschaltung der Anlage führt. Dabei bleibt der Bauelementeaufwand noch immer geringer als bei einer doppelten Redundanz.

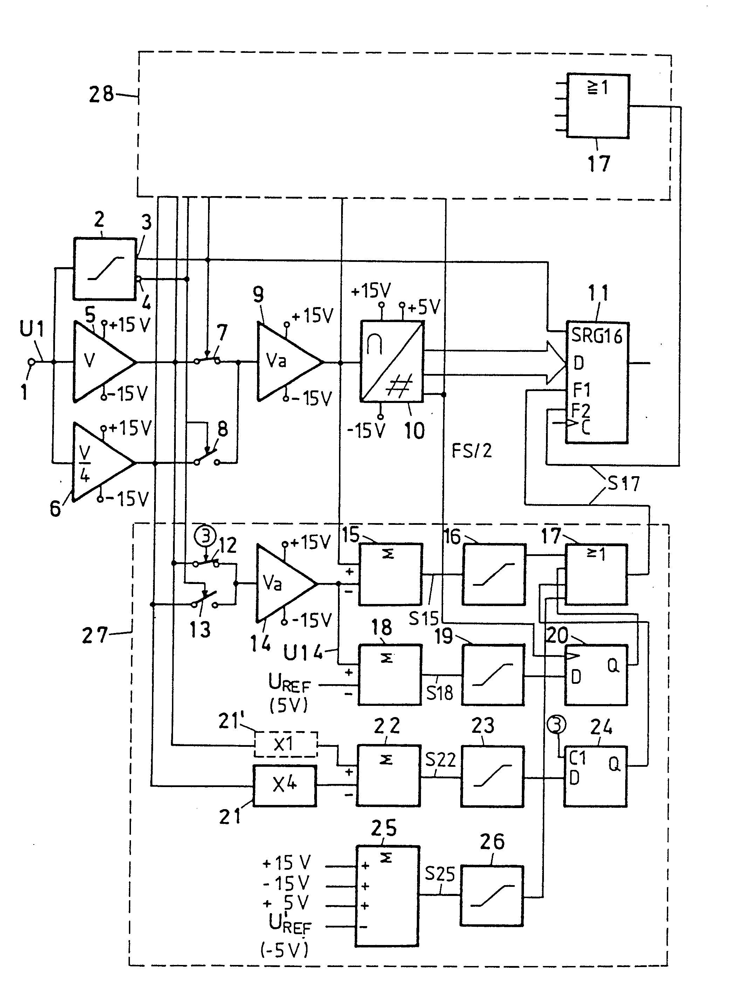

Kurze Beschreibung der Zeichnung

Die Erfindung wird nachstehend anhand eines Ausführungsbeispiels erläutert. Die einzige Figur zeigt ein Prinzipschaltbild eines Messwertumsetzers mit 2 Ueberwachungsschaltungen.

Weg zur Ausführung der Erfindung

Mit 1 ist in der Figur ein Signaleingang eines Messwertumsetzers 2 - 10 für ein umzusetzendes Messwert-bzw. Eingangssignal $U1$ bezeichnet. Der Signaleingang 1 ist mit den Eingängen eines Grenzwertdetektors bzw. Fensterkomparators 2, eines ersten Verstärkers 5 mit einem vorgebbaren Verstärkungsfaktor $V$ und eines 2. Verstärkers 6 mit einem vorgebbaren Verstärkungsfaktor $V/4$ elektrisch verbunden. Der Fensterkomparator 2 dient zur Messbereichumschaltung des Messwertumsetzers 2 - 10 und weist 2 vorgebbare Grenzwerte auf. Der Verstärker 5 steht über einen elektronischen Schalter 7 und der Verstärker 6 über einen elektronischen Schalter 8 mit einem als Impedanzwandler dienenden Verstärker 9 mit vorgebbarem Verstärkungsfaktor $Va$ in elektrischer Verbindung. Der Verstärker 9 steht über einen Analog/Digital-Wandler 10 mit parallelem Datenausgang mit einem Dateneingang $D$ eines Schieberegisters 16 mit parallelem Eingang und seriellem Ausgang in Verbindung.

Ein nichtinvertierender Ausgang 3 des Fensterkomparators 2 steht mit dem Schalter 7 und ein invertierender Ausgang des Fensterkomparators 2 mit dem Schalter 8 in Steuerverbindung. Bei Eingangssignalen $U1$ kleiner Amplitude ist innerhalb eines 1. Messbereiches der Schalter 7 geschlossen und Schalter 8 geöffnet. Bei Eingangssignalen $U1$ grösserer Amplitude ist innerhalb eines 2. Messbereiches, der an den 1. Messbereich angrenzt, entsprechend einem Grenzwert des Fensterkomparators 2, der Schalter 7 geöffnet und Schalter 8 geschlossen. Der Zustand des Fensterkomparators 2 wird dem Schieberegister 11 als Bereichs-Bit zugeführt.

Die Funktionen und Speisespannungen des Messwertumsetzers 2 - 10 werden in gleich aufgebauten und eingangsseitig an gleiche Aus-bzw. Eingänge angeschlossene Ueberwachungsschaltungen 27 und 28 überwacht.

Die Ueberwachungsschaltung 27 weist den Schaltern 7 und 8 entsprechende elektronische Messbereichsumschalter 12 und 13 auf, die eingangsseitig an die Ausgänge der Verstärker 5 bzw. 6 elektrisch angeschlossen sind. Der Schalter 12 steht mit dem nichtinvertierenden Ausgang 3 und der Schalter 13 mit dem invertierenden Ausgang 4 des Fensterkomparators 2 in Steuerverbindung. Ausgangsseitig sind die Schalter 12 und 13 über einen dem Verstärker 9 gleichen Impedanzwandler bzw. Verstärker 14, dessen Verstärkungsfaktor $Va$ gleich dem des Verstärkers 9 ist, mit einem invertierenden Eingang eines Vergleichers bzw. Summiergliedes bzw. Subtrahierers bzw. Differenzverstärkers 15 elektrisch verbunden.

Der nichtinvertierende Eingang des Differenzverstärkers 15 ist an den Ausgang des Verstärkers 9 angeschlossen. Ausgangsseitig ist der Differenzverstärker 15 über einen Grenzwertdetektor bzw. Fensterkomparator 16 mit vorgebbaren Grenzwerten grösser und kleiner Null mit einem 1. Eingang eines ODER-Gliedes 17 elektrisch verbunden. Der Ausgang des Fensterkomparators 16 nimmt den logischen Wert "1" an, wenn ein Ausgangssignal S15 des Differenzverstärkers 15 einen der vorgegebenen Grenzwerte des Fensterkomparators 16 überschreitet, andernfalls ist S15 = "0".

Der Ausgang des ODER-Gliedes 17 ist mit einem 1. Daten-bzw. Fehlersignaleingang F1 des Schieberegisters 11 elektrisch verbunden. Ein Fehler-bzw. Ausgangssignal S17 des ODER-Gliedes 17 nimmt den logischen Wert "1" an, wenn wenigstens an einem seiner Eingänge ein Signal logisch "1" anliegt, andernfalls ist S17 = "0".

Der Ausgang des Verstärkers 14 ist ferner mit einem nichtinvertierenden Eingang eines Differenzverstärkers 18 verbunden, dessen invertierendem Eingang eine Referenzspannung $U_{REF}$ von 5 V zugeführt ist. Diese Referenzspannung $U_{REF}$ entspricht dem halben Endwert von 10 V des Analog/Digital-Wandlers 10. Ausgangsseitig ist der Differenzverstärker 18 über einen Fensterkomparator 16 mit vorgebbaren Grenzwerten grösser und kleiner Null mit einem Dateneingang D eines flankengesteuerten D-Flipflops 20 elektrisch verbunden. Dem Takteingang des D-Flipflops 20 ist ein Taktsignal FS/2 vom Analog/Digital-Wandler 10 zugeführt, das bei 50 % des Endwertes vom Analog/Digital-Wandler 10 abgegeben wird. Ein nichtinvertierender Ausgang Q des D-Flipflops 20 ist mit einem 2. Eingang des ODER-Gliedes 17 elektrisch verbunden.

Der Ausgang des Verstärkers 5 ist ferner über einen nicht obligatorischen Multiplizierer 21′ mit einem Multiplikationsfaktor 1 an den nichtinvertierenden Eingang eines Differenzverstärkers 22 angeschlossen. Der Ausgang des Verstärkers 6 ist ferner über einen Multiplizierer 21 mit einem Multiplikationsfaktor 4 mit dem invertierenden Eingang des Differenzverstärkers 22 elektrisch verbunden. Ausgangsseitig ist der Differenzverstärker 22 über einen Fensterkomparator 23 mit vorgebbaren Grenzwerten grösser und kleiner Null mit einem Dateneingang D eines zustandsgesteuerten D-Flipflops 24 (transparent-latch) elektrisch verbunden. Der Steuereingang C1 (enable) des D-Flip flops 24 ist mit dem nichtinvertierenden Ausgang 3 des Fensterkomparators 2 elektrisch verbunden. Ein nichtinvertierender Ausgang Q des Flipflops 24 ist mit einem 3. Eingang des ODER-Gliedes 17 elektrisch verbunden.

Alle analogen Bauelemente sind an Speisespannungen von +15 V und -15 V angeschlossen, alle digitalen an +5V. Der Analog/Digital-Wandler 10 ist an alle 3 Speisespannungen angeschlossen. Die 3 Speisespannungen +15 V, -15 V und +5 V sind an nichtinvertierende Eingänge des Differenzverstärkers 25 geführt, während eine Referenzspannung $U′_{REF}$ von -5 V einem invertierenden Eingang des Differenzverstärkers 25 zugeführt ist. Ausgangsseitig ist der Differenzverstärker 25 über einen Fensterkomparator 26 mit vorgebbaren Grenzwerten grösser und kleiner Null mit einem 4. Eingang des ODER-Gliedes 17 elektrisch verbunden.

Der Ausgang des ODER-Gliedes 17 der Ueberwachungsschaltung 28 ist mit einem 2. Fehlersignaleingang F2 des Schieberegisters 11 elektrisch verbunden. C bezeichnet einen Taktsignaleingang des Schieberegisters 11. Die Taktung des Schieberegisters 11 kann nach jeder Umwandlung oder nach einer vorgebbaren Anzahl von Umwandlungen im Analog/Digital-Wandler 10 erfolgen.

Jede Ueberwachungsschaltung 27 bzw. 28 ermöglicht bei möglichst einfacher Struktur eine kontinuierliche Kontrolle des Messwertumsetzers, wobei in jedem vom Schieberegister 11 ausgegebenen Datentelegramm das Ergebnis der Kontrolle in 2 zusätzlichen Kontrollbits einem nicht dargestellten Datenempfänger über eine faseroptische Leitung zugeführt wird. Liegt ein Fehler beim Messwertumsetzer 5 - 10 vor, so müssen beide Fehlersignale S17 = "1" sein, entsprechend den beiden Kontrollbits. Zeigt nur eine der beiden Ueberwachungsschaltungen 27 oder 28 mit S17 = "1" einen Fehler an, so kennzeichnet dies einen Fehler innerhalb dieser Ueberwachungsschaltung. Der Messwert umsetzer 5 - 10 bleibt weiter funktionsfähig und überwacht durch die 2. intakte Ueberwachungsschaltung. Der Fehler kann bei einer passenden Gelegenheit behoben werden.

Wesentlich bei jeder Ueberwachungsschaltung 27 bzw. 28 ist, dass alle zu überwachenden analogen Funktionen mit einer anderen, gleichwertigen Funktion verglichen werden. Dieser Vergleich kann im Verhältnis 1 : 1 oder in einem beliebigen, jedoch genau definierten Verhältnis geschehen. So werden die Ausgangssignale der Verstärker 5 und 6 im inversen Verhältnis von 1 : 4 mittels der Multiplikatoren 21 und 21′ gewichtet und im Subtrahierer bzw. Differenzverstärker 22 voneinander subtrahiert. Bei richtiger Funktion und Signalamplitude innerhalb des linearen Bereiches des empfindlicheren Verstärkers 5 ist diese Differenz Null. Ein Ausgangssignal S22 des Differenzverstärkers 22 wird im Fensterkomparator 23, dessen Mittelpunkt bei Null liegt, überwacht. Die Breite des Fensters bestimmt die Auflösung des Vergleiches bzw. die tolerierte Fehlergrenze. Im zustandsgesteuerten D-Flipflop 24 wird Q = D, solange C1 = "1" ist, wobei der gerade bestehende Ausgangszustand auch bei C1 = "0" gespeichert bleibt. Ein Ausgangssignal logisch "1" des Fensterkomparators 23, entsprechend D = "1", kennzeichnet einen Fehler in einem der Verstärker 5 und/oder 6, der beim Einschaltsignal der Schalter 7 und 12 am Ausgang Q von 24 anliegt und über das ODER-Glied 17 auf den Fehlersignaleingang F1 übertragen wird. Im entsprechenden Kontrollbit des Datentelegramms wird eine "1" zum Datenempfänger übertragen, der den Fehler erkennen kann.

Wo in der zu überwachenden Schaltung keine gleichwertige Funktion vorhanden ist, wird diese in dem Ueberwachungskreis 27 bzw. 28 separat nachgebildet, z.B. die Schalter 12 und 13 mit nachgeschaltetem Verstärker 14. Die Schalter 12 und 13 werden synchron mit den Schaltern 7 und 8 umgeschaltet. Die Ausgangssignale der Verstärker 9 und 14 werden in dem Differenzverstärker 15 voneinander subtrahiert. Das Ausgangssignal S15 des Differenzverstärkers 15 wird mittels des Fensterkomparators 16 auf Gleichheit überprüft. Damit wird gleichzeitig die Funktion der Schalter 7 und 8 sowie des Verstärkers 9 überprüft.

Der Vergleich des Ausgangssignals des zu überwachenden Schaltkreises mit dem Ausgangssignal des Schaltkreises mit gleichwertiger Funktion geschieht vorzugsweise laufend, beschränkt sich jedoch auf Zeitintervalle, wo beide zum Vergleich benutzten Schaltkreise sich innerhalb des nominellen Arbeitsbereiches befinden, z.B. innerhalb des linearen Ausgangsspannungsbereiches eines Operationsverstärkers. Zum laufenden Vergleich von analogen Spannungswerten können vorzugsweise Spannungs-Fensterkomparatoren benutzt werden, die mit einem digitalen Signal abgefragt werden können. Dabei entfallen die D-Flipflops 20 und 24.

Wo immer Absolutwerte einer Spannung überwacht werden, z.B. Referenzspannungen, Speisespannungen oder deren Kombination, wird im Ueberwachungsschaltkreis eine eigene Referenzspannung $U_{REF}$ bzw. $U'_{REF}$ benutzt.

Mittels des Differenzverstärkers 18 und des Fensterkomparators 19 wird die Genauigkeit des Analog/Digital-Wandlers 10 bei einem signifikanten Momentanwert der umzusetzenden Signale geprüft, nämlich bei $+50$ % des Endwertes (full-scale). Bei 50 % des Endwertes liefert der Analog/Digital-Wandler 10 das FS/2-Signal an den Takteingang des D-Flipflops 20. Zu diesem Zeitpunkt sollte eine Ausgangsspannung U14 des Verstärkers 14 mit der Referenzspannungen $U_{REF}$ übereinstimmen bzw. das Ausgangssignal S18 des Differenzverstärkers 18 innerhalb der eingestellten Fensterwerte des Fensterkomparators 19 liegen. Andenfalls wird im D-Flipflop 20 mit D = "1" auch Q = "1" und somit ein Fehlerkennzeichen über das ODER-Glied 17 an den Fehlersignaleingang F1 des Schieberegisters 11 übertragen.

Mittels des Differenzverstärkers 25 können alle Speisespannungen oder deren gewichtete Summe mit der Referenzspannung $U'_{REF}$ verglichen werden, so dass eine fehlerhafte Speisespannung mittels des Fensterkomparators 26 zu einer Fehlerkennzeichnung führt.

Die Ausgänge der Fensterkomparatoren 16, 26 und der D-Flipflops 20, 24 können auch ohne Zwischenschaltung eines ODER-Gliedes 17 direkt an unterschiedliche Fehlersignaleingänge (nicht dargestellt) des Schieberegisters 11 geführt sein und vorzugsweise mit dem periodischen Datentelegramm als Fehlerdiagnose-Bits dem Datenempfänger übermittelt werden.

Anstelle von 2 Eingangs-oder Skalierverstärkern 5 und 6 und 2 Messbereichsumschaltungern 7 und 8 können auch 3 oder mehr Eingangsverstärker mit vorzugsweise in 2er Potenzen abgestuften Verstärkungsfaktoren und entsprechend 3 oder mehr Bereichsumschater vorgesehen sein. Die Ausgangssignale dieser Eingangsverstärker sind dann dem Differenzverstärker 22, entsprechend invers zum Multiplikationsfaktor gewichtet, zugeführt. Anstatt 2er Vergleichsschalter 12 und 13 sind dann entsprechend 3 oder mehr Vergleichsschalter vorgesehen.

Die Genauigkeit des Analog/Digital-Wandlers 10 kann anstelle bei 50 % seines Endwertes auch bei einem oder mehreren anderen signifikanten Werten geprüft werden. Die für den Vergleich verwendete Referenzspannung $U_{REF}$ muss dann natürlich diesem oder diesen anderen Werten entsprechen. Falls mehrere Werte des Analog/Digital-Wandlers 10 geprüft werden sollen, muss für jeden zu vergleichenden Wert ein Differenzverstärker 18 mit nachgeordnetem Fensterkomparator 19 und D-Flipflop 20 vorgesehen sein.

Die zu vergleichenden Signale können statt subtrahiert auch dividiert werden. Dabei ist der einem nicht dargestellten Dividierglied nachgeschaltete Fensterkomparator nicht auf den Mittelwert Null sondern auf einen Mittelwert 1 eingestellt.

Es versteht sich, dass bei normalen Anforderungen an die Funktionssicherheit die redundante Ueberwachungsschaltung 28 entfallen kann.

Gewerbliche Verwertbarkeit

Die Erfindung eignet sich für eine Ueberwachung hybrider Messwerterfassungs-und Verarbeitungssysteme mit analogen und digitalen Bauelementen, vorzugsweise für die Ueberwachung der Messwerterfassungselektronik von Strom-und Spannungswandlern in schwer zugänglichen Hochspannungs-Freiluftanlagen.

**Ansprüche**

1. Funktionsüberwachungseinrichtung für einen Messwertumsetzer, dadurch gekennzeichnet,

a) dass mindestens für ein zu überwachendes Bauelement (5; 7 - 9) und/oder eine zu überwachende Spannung (U14; ±15 V, +5 V) des Messwertumsetzers (5 - 10) ein Ueberwachungskreis vorgesehen ist,

b) der mindestens ein in seiner Funktion gleichwertiges Vergleichsbauelement (6; 12 - 14) und/oder eine Referenzspannung ($U_{REF}$, $U'_{REF}$) umfasst,

c) dass das Ausgangssignal des zu überwachenden Bauelements und/oder die zu überwachende Spannung mit dem Ausgangssignal des Vergleichsbauelements und/oder mit einer Referenzspannung verglichen wird und

d) dass ein Fehlersignal (S17) erzeugt wird, wenn die zu vergleichenden Werte um mehr als mindestens einen vorgebbaren Grenzwert voneinander abweichen.

2. Funktionsüberwachungseinrichtung nach Anspruch 1, dadurch gekennzeichnet,

a) dass das Ausgangssignal des zu überwachenden Bauelements (5; 7 - 9) und/oder die zu überwachende Spannung (U14; ±15 V, +5 V) vor dem Vergleich gewichtet werden

b) und/oder dass das Ausgangssignal des Vergleichsbauelementes (6; 12 - 14) und/oder die Referenzspannung ($U_{REF}$, $U'_{REF}$) vor dem Vergleich gewichtet werden,

c) insbesondere, dass eine Fehlerinformation in mindestens einem Fehlerkontrollbit eines Datentelegramms an einen Datenempfänger übermittelt wird.

3. Funktionsüberwachungseinrichtung für einen Messwertumsetzer, dadurch gekennzeichnet,

a) dass mindestens ein zu überwachendes Bauelement (5; 7 - 9) und/oder eine zu überwachende Spannung (U14, ±15 V, +5 V) des Messwertumsetzers (5 - 10) über einen Vergleicher (15, 18, 23, 25) mit mindestens einem in seiner Funktion gleichwertigen Vergleichsbauelement (6; 12 - 14) und/oder mit einer Referenzspannung ($U_{REF}$, $U'_{REF}$) in Wirkverbindung stehen, und

b) dass der Vergleicher ausgangsseitig mit einem Grenzwertdetektor (16, 19, 23, 26) mit mindestens einem vorgebbaren Fehlergrenzwert in Wirkverbindung steht, an dem ausgangsseitig ein Fehlersignal abgreifbar ist, wenn das Ausgangssignal (S15, S18, S22, S25) des Vergleichers grösser als dieser mindestens eine Fehlergrenzwert ist.

4. Funktionsüberwachungseinrichtung nach Anspruch 3, dadurch gekennzeichnet,

a) dass der Grenzwertdetektor ein Fensterkomparator (16, 19, 23, 26) ist,

b) dass der Fensterkomparator ausgangsseitig mit einem 1. Dateneingang (F1, F2) eines Schieberegisters (11) in Wirkverbindung steht und

c) dass das mindestens eine zu überwachende Bauelement (5, 7 - 9) über einen Analog/Digital-Wandler (10) mit mindestens einem 2. Dateneingang (D) des Schieberegisters in Wirkverbindung steht.

5. Funktionsüberwachungseinrichtung nach Anspruch 4, dadurch gekennzeichnet,

a) dass ein erster Verstärker (5) mit vorgebbarem ersten Verstärkungsfaktor (V) als analoges, zu überwachendes Bauelement vorgesehen ist,

b) dass mindestens ein zu diesem 1. Verstärker gleichartiger 2. Verstärker (6) als Vergleichsbauelement vorgesehen ist, mit einem vorgebbaren 2. Verstärkungsfaktor (V/4) der zu dem Verstärkungsfaktor des 1. Verstärkers proportional ist,

c) insbesondere, dass mindestens einer der Verstärker (5, 6) ausgangsseitig über einen Multiplizierer (21, 21') mit einem 1. Vergleicher (22) in Wirkverbindung steht,

d) dass der Grenzwertdetektor (23) ausgangsseitig über ein zustandsgesteuertes D-Flipflop (24) mit dem 1. Dateneingang (F1, F2) des Schieberegisters (11) in Wirkverbindung steht und

e) dass der Zustand des D-Flipflops in Abhängigkeit von der Amplitude eines Eingangssignals (U1) des zu überwachenden Bauelements (5) gesteuert ist.

6. Funktionsüberwachungseinrichtung nach Anspruch 4 oder 5, dadurch gekennzeichnet,

a) dass mindestens ein 1. und 2. Schalter (7, 8) als analoge, zu überwachende Bauelemente vorgesehen sind,

b) dass mindestens ein 3. und 4. Schalter (12, 13) als Vergleichsbauelemente vorgesehen sind,

c) dass der 1. Schalter (7) eingangsseitig mit einem bzw. dem 1. Verstärker (5) und der 2. Schalter (8) mit einem bzw. dem 2. Verstärker (6) in Wirkverbindung stehen,

d) dass diese mindestens zwei 1. und 2 Schalter (7, 8) ausgangsseitig über einen 3. Verstärker (9) mit vorgebbarem 3. Verstärkungsfaktor (Va) mit einem 2. Vergleicher (15) in Wirkverbindung stehen,

e) dass mindestens ein 3. und 4. Schalter (12, 13) vorgesehen sind, von denen einer (12) eingangsseitig mit dem Eingang des 1. Schalters (7) und ein anderer (13) mit dem Eingang des 2. Schalters (8) in Wirkverbindung stehen, und

f) dass mindestens diese 3. und 4. Schalter (12, 13) ausgangsseitig über einen 4. Verstärker (14) mit diesem 3. Verstärkungsfaktor (Va) mit dem 2. Vergleicher (15) in Wirkverbindung stehen.

7. Funktionsüberwachungseinrichtung nach Anspruch 6, dadurch gekennzeichnet,

a) dass der 4. Verstärker (14) ausgangsseitig zusätzlich mit einem 3. Vergleicher (18) in Wirkverbindung steht,

b) dass dem 3. Vergleicher eingangsseitig ein Referenzsignal ($U_{REF}$) zugeführt ist, das einem vorgebbaren Datenwert des Analog/Digital-Wandlers (10) zugeordnet ist,

c) dass der 3. Vergleicher ausgangsseitig über einen Fensterkomparator (19) mit dem Dateneingang eines flankengetriggerten Fliplops (20) in Wirkverbindung steht,

d) dass das Triggersignal (FS/2) für dieses Flipflop in Abhängigkeit von diesem vorgebbaren Datenwert des Analog/Digital-Wandlers (10) gebildet ist und

e) dass dieses Flipflop ausgangsseitig mit dem 1. Dateneingang (F1, F2) des Schieberegisters (11) in Wirkverbindung steht.

8. Funktionsüberwachungseinrichtung nach einem der Ansprüche 3 bis 7, dadurch gekennzeichnet,

a) dass die Speisespannung (±15 V, +5 V) mindestens eines zu überwachenden Bauelements (5 - 9) eingangsseitig einem 4. Vergleicher (25) zugeführt ist,

b) dass dem 4. Vergleicher eingangsseitig ferner eine Referenzspannung ($U'_{REF}$) zugeführt ist, und

c) dass der 4. Vergleicher ausgangsseitig mit dem 1. Dateneingang (F1, F2) des Schieberegisters (11) in Wirkverbindung steht,

d) insbesondere, dass zusätzlich die Speisespannung mindestens einen analogen Vergleichs-Bauelementes eingangsseitig dem 4. Vergleicher zugeführt ist.

9. Funktionsüberwachungseinrichtung nach Anspruch 8, dadurch gekennzeichnet, dass die Speisespannungen des Analog/Digital-Wandlers (10) eingangsseitig dem 4. Vergleicher (25) zugeführt sind.

10. Funktionsüberwachungseinrichtung nach einem der Ansprüche 3 bis 9, dadurch gekennzeichnet,

a) dass der Vergleicher ein Subtrahierer (15, 18, 22) oder Summierer (25) ist und

b) dass der Grenzwertdetektor (16, 19, 23, 25) über ein ODER-Glied (17) mit dem 1. Dateneingang (F1, F2) eines bzw. des Schieberegisters (11) in Wirkverbindung steht.

11. Funktionsüberwachungseinrichtung für einen Messwertumsetzer mit mehreren, zum Teil gleichwertigen analogen Funktionen, gekennzeichnet durch folgende Merkmale:

-Jede zu überwachende analoge Funktion des Messwertumsetzers ist wenn immer möglich mit einer anderen, gleichwertigen Funktion im Messwertumsetzer verglichen;

-nur wo die Messwertumsetzer zu der zu überwachenden Funktion keine andere, gleichwertige Funktion vorhanden ist, wird eine solche in der Ueberwachungseinrichtung separat nachgebildet;

-wo immer der Absolutwert einer Spannung im Messwertumsetzer zu überwachen ist, erfolgt dies durch Vergleich mit einer in der Ueberwachungseinrichtung gebildeten Referenzspannung.

12. Funktionsüberwachungseinrichtung nach Anspruch 11, weiter gekennzeichnet durch folgendes Merkmal:

-Der Vergleich des Ausgangssignals einer zu überwachenden Funktion mit dem Ausgangssignal einer gleichwertigen oder nachgebildeten Funktion ist beschränkt auf Zeitintervalle, in denen sich die beiden Funktionen innerhalb ihres Arbeitsbereiches befinden.

13. Funktionsüberwachungseinrichtung nach Anspruch 11 oder 12, weiter gekennzeichnet durch folgendes Merkmal:

-In Fällen, in denen von einem Analog/Digital-Wandler im Messwertumsetzer Strobe-Signale abgeleitet werden können, die einen signifikanten Momentanwert des dem Analog/Digital-Wandler zugeführten, zu verarbeitenden Signals markieren, sind diese Strobe-Signale zur Festlegung von Zeitpunkten verwendet, zu denen, zur Prüfung der absoluten Genauigkeit des Analog/Digital-Wandlers, das diesem zugeführte Signal mit einer Spannungsreferenz verglichen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 306 724 (SIEMENS)<br>* Zusammenfassung; Figur 1; Anspruch 1 * | 1,11 | G 01 D 3/08 |
| X | EP-A-0 118 008 (SIEMENS)<br>* Zusammenfassung; Figur 1; Anspruch 1 * | 1-3,11 | |
| A | DE-A-3 411 837 (WERNER LAMBERZ)<br>* Figur 2 * | 4 | |
| A | WO-A-8 100 774 (BOEING) | | |
| A | EP-A-0 169 284 (FELLOWS) | | |

**RECHERCHIERTE SACHGEBIETE (Int. Cl.4)**

G 01 D
G 05 B

Der vorliegende Recherchenbericht wurde für alle Patentansprüche erstellt

| Recherchenort | Abschlußdatum der Recherche | Prüfer |
|---|---|---|
| DEN HAAG | 22-02-1988 | HOORNAERT W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument